# EUROPEAN PATENT SPECIFICATION

(11) **EP 3 783 815 B1**
(45) Date of publication and mention of the grant of the patent: **03.04.2024**
(21) Application number: 19788851.4
(22) Date of filing: 04.04.2019
(51) Int. Cl.: H04B 10/294, H04J 14/02, H04B 10/572, H04B 10/079

(54) **AMCC DEVICE AND TRANSMISSION WAVELENGTH ADJUSTMENT AND CONTROL METHOD**
AMCC-VORRICHTUNG UND VERFAHREN ZUR EINSTELLUNG DER ÜBERTRAGUNGSWELLENLÄNGE
DISPOSITIF AMCC ET PROCÉDÉ D'AJUSTEMENT ET DE CONTRÔLE DE LA LONGUEUR D'ONDE DE TRANSMISSION

(30) Priority: 18.04.2018 CN 201810350975
(43) Date of publication of application: 24.02.2021
(73) Proprietor: ZTE Corporation, Guangdong 518057 (CN)
(72) Inventor: YANG, Wei, Shenzhen, Guangdong 518057 (CN); TIAN, Hongliang, Shenzhen, Guangdong 518057 (CN); CHEN, Aimin, Shenzhen, Guangdong 518057 (CN); YANG, Bo, Shenzhen, Guangdong 518057 (CN)
(74) Representative: Casalonga
(86) International application number: PCT/CN2019/081473
(87) International publication number: WO 2019/201100

(56) References cited:
- CN-A- 107 147 513
- CN-A- 107 359 939
- US-A1- 2017 207 596
- NAKAGAWA GOJI ET AL: "Experimental investigation of auxiliary management and control channel superimposition for mobile fronthaul in DWDM-PON system", PROCEEDINGS OF SPIE; [PROCEEDINGS OF SPIE ISSN 0277-786X VOLUME 10524], SPIE, US, vol. 10560, 30 January 2018 (2018-01-30), pages 1056006-1056006, XP060105761, DOI: 10.1117/12.2286436 ISBN: 978-1-5106-1533-5
- HONDA KAZUAKI ET AL: "Wavelength Adjustment of Upstream Signal using AMCC with Power Monitoring for WDM-PON in 5G Mobile Era", 2018 OPTICAL FIBER COMMUNICATIONS CONFERENCE AND EXPOSITION (OFC), OSA, 11 March 2018 (2018-03-11), pages 1-3, XP033357572, [retrieved on 2018-06-13]
- DONG JIAN ET AL: "Cascaded Phase Modulation for AMCC Superimposition Toward MFH Employing CPRI", IEEE PHOTONICS JOURNAL, IEEE, USA, vol. 9, no. 4, 1 August 2017 (2017-08-01), pages 1-6, XP011656506, DOI: 10.1109/JPHOT.2017.2720755 [retrieved on 2017-07-14]
- NAKAGAWA GOJI ET AL: "Development of Evaluation Platform of AMCC Superimposition on CPRI Signal Transmission for Mobile Fronthaul Network", 2017 EUROPEAN CONFERENCE ON OPTICAL COMMUNICATION (ECOC), IEEE, 17 September 2017 (2017-09-17), pages 1-3, XP033336509, DOI: 10.1109/ECOC.2017.8346183 [retrieved on 2018-04-24]
- "Phoneline networking transceivers - Payload format and link layer requirements; G.989.2 (2014) Amendment 1 (04/16)", ITU-T STANDARD, INTERNATIONAL TELECOMMUNICATION UNION, GENEVA ; CH , no. G.989.2 (2014) Amendment 1 (04/16) 13 April 2016 (2016-04-13), pages 1-114, XP044187013, Retrieved from the Internet: URL:http://mirror.itu.int/dms/pay/itu-t/re c/g/T-REC-G.989.2-201604-I!Amd1!PDF-E.pdf [retrieved on 2016-10-25]
- KAZUAKI HONDA: "Wavelength Adjustment of Upstream Signal using AMCC with Power Monitoring for WDM-PON in 5G Mobile Era", 2018 Optical Fiber Communications Conference and Exposition (OFC), 15 March 2018 (2018-03-15), pages 1-3, XP033357572,

## Description

### TECHNICAL FIELD

The present application relates to, but is not limited to, the technical field of communications and, particularly, relates to an auxiliary management and control channel (AMCC) device and a transmission wavelength adjustment and control method.

### BACKGROUND

With the development of the 5th Generation (5G) technology, wireless base stations have become more demanding in terms of bandwidth and delay, posing new challenges to wireless access. In 4G era, the distance from a base station to a building base band unit (BBU) is not long, and the BBU accesses the base station via a copper wire or a point-to-point optical fiber. In 5G, the data amount of each base station increases, the delay requirements decrease, and the distribution unit (DU) is farther away from the base station, so the optical fiber is a good option for access. However, if the point-to-point optical fiber is used for access, a lot of long-distance backbone fibers are required, resulting in resource waste. Wavelength division multiplexing technology is adopted to achieve optical access of each radio remote unit (RRU), and each RRU occupies a separate wavelength channel, which can satisfy the demands of large-bandwidth, low-delay access while saving backbone fibers.

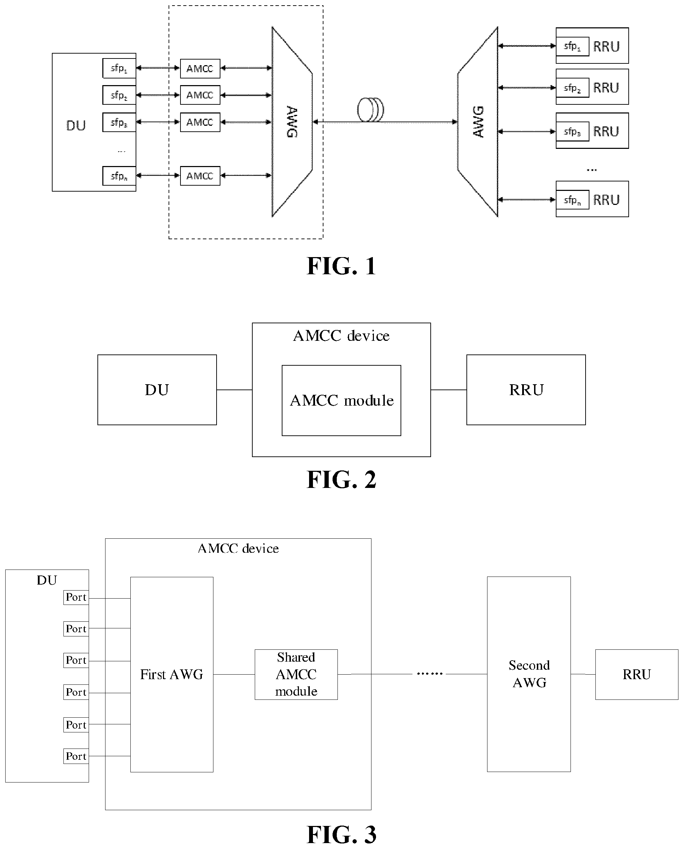

FIG. 1 is a block diagram of wavelength division multiplexing access. The communication between a DU and RRUs is performed through n wavelength channels, and n wavelengths are multiplexed and demultiplexed through an arrayed waveguide grating (AWG) so that there is only one backbone fiber. In FIG. 1, the DU is inserted with n optical modules (FIG. 1, for example, optical modules with small form pluggables (sfps) packaging, or other forms of packaging according to the actual situation), and each optical module corresponds to a pair of transceiver wavelengths. The RRU is inserted with one optical module, and its transceiver wavelength corresponds to one optical module in the DU.

In order to achieve the unification, flexible deployment and cost reduction of optical modules on the RRU side, the optical modules on the RRU side need to be transmission adjustable. However, since the optical module of the RRU does not know it is connected to which port of the AWG at the beginning, it does not know the wavelength of which channel should be transmitted. In order to solve this problem without occupying in-band bandwidth, the DU can send wavelength information from the DU to the RRU through the AMCC technology. The AMCC can be achieved through top modulation, and can also be achieved in other manners. The RRU, after receiving an AMCC message, adjusts a transmit wavelength to a corresponding wavelength. However, there are two problems with this method.

The first problem is that the optical modules on the DU end must use the fixed wavelength and cannot use adjustable wavelength, because if the wavelength of the optical modules on the DU end is also adjustable, the DU end will also not be able to know it is connected to which port of the AMG at the beginning and cannot determine the transmit wavelength either.

The second problem is that this method requires the DU to have an AMCC function (optical modules of some manufacturers have the AMCC function, but this function needs to be turned on through a certain device), but in fact, DUs from different manufacturers may not all have this function, leading to problems such as mixing of a variety of devices in the network and device management difficulties. Meanwhile, the DU device itself is provided with the AMCC function, which requires to transform the DU device structure and introduce corresponding hardware and software resources, and the AMCC function of the DU device can only be used by itself, and the utilization rate is low.

NAKAGAWA GOJI ET AL: "Experimental investigation of auxiliary management and control channel superimposition for mobile fronthaul in DWDM-PON system", PROCEEDINGS OF SPIE;[ PROCEEDINGS OF SPIE ISSN 0277-786X VOLUME 10524], SPIE, US, vol.10560,30 January 2018(2018-01-30), pages 1056006-1056006, relates to experimental investigation of auxiliary management and control channel superimposition for Mobile Fronthaul in DWDM-PON System. Several types of superimposition and detection schemes that are proposed and developed are investigated, and the impact of AMCC superimposition on the main signal as well as the quality of the superimposed signal are evaluated.

HONDA KAZUAKI ET AL: "Wavelength Adjustment of Upstream Signal using AMCC with Power Monitoring for WDM-PON in 5G Mobile Era", 2018 OPTICAL FIBER COMMUNICATIONS CONEERENCE AND EXPOSITION (OFC),OSA,11 March 2018(2018-03-11),pages 1-3,relates to wavelength adjustment of upstream signal using AMCC with power monitoring for WDM-PON. The OLT has an AMCC controller and the ONU has an AMCC processor. The receiver monitors the optical received power input to receiver after the WDM filter for the upstream signal and transmits it to the AMCC controller. The AMCC processor in the ONU receives the AMCC signal superimposed on the downstream signal and controls the transmitter's wavelength.

### SUMMARY

The invention is set out in the appended set of claims.

### BRIEF DESCRIPTION OF DRAWINGS

FIG. 1 is a structural diagram of an optical network;
FIG. 2 is a schematic diagram of a first link of an AMCC device, a DU and an RRC according to an embodiment of the present application;
FIG. 3 is a schematic diagram of a second link of the AMCC device, the DU and the RRC according to an embodiment of the present application;
FIG. 4 is a schematic diagram of a third link of the AMCC device, the DU and the RRC according to an embodiment of the present application;
FIG. 5 is a schematic diagram of a fourth link of the AMCC device, the DU and the RRC according to an embodiment of the present application;
FIG. 6 is a schematic diagram of a fifth link of the AMCC device, the DU and the RRC according to an embodiment of the present application;
FIG. 7 is a flowchart of a transmission wavelength adjustment method according to an embodiment of the present application;
FIG. 8 is a schematic diagram of a sixth link of the AMCC device, the DU and the RRC according to an embodiment of the present application;
FIG. 9 is a schematic diagram of a seventh link of the AMCC device, the DU and the RRC according to an embodiment of the present application;
FIG. 10 is a schematic diagram of an eighth link of the AMCC device, the DU and the RRC according to an embodiment of the present application;
FIG. 11 is a schematic diagram of a ninth link of the AMCC device, the DU and the RRC according to an embodiment of the present application;
FIG. 12 is a schematic diagram of a tenth link of the AMCC device, the DU and the RRC according to an embodiment of the present application;
FIG. 13 is a schematic diagram of an eleventh link of the AMCC device, the DU and the RRC according to an embodiment of the present application;
FIG. 14 is a schematic diagram of a twelfth link of the AMCC device, the DU and the RRC according to an embodiment of the present application;
FIG. 15 is a schematic diagram of a thirteenth link of the AMCC device, the DU and the RRC according to an embodiment of the present application;
FIG. 16 is a schematic diagram of a fourteenth link of the AMCC device, the DU and the RRC according to an embodiment of the present application;
FIG. 17 is a schematic diagram of a fifteenth link of the AMCC device, the DU and the RRC according to an embodiment of the present application;
FIG. 18 is a schematic diagram of a sixteenth link of the AMCC device, the DU and the RRC according to an embodiment of the present application;
FIG. 19 is a schematic diagram of a seventeenth link of the AMCC device, the DU and the RRC according to an embodiment of the present application;
FIG. 20 is a schematic diagram of an eighteenth link of the AMCC device, the DU and the RRC according to an embodiment of the present application; and
FIG. 21 is a schematic diagram of a nineteenth link of the AMCC device, the DU and the RRC according to an embodiment of the present application.

### DETAILED DESCRIPTION

The solution of the present application will be further described in detail in conjunction with the drawings and embodiments in the Description.

As shown in FIG. 2, this embodiment provides an AMCC device. The AMCC device is independent of a DU and an RRU, and includes an AMCC module.

The AMCC module is configured to adjust a transmission wavelength between the DU and the RRU by sending predetermined information.

The AMCC device provided in this embodiment is an AMCC device which is independent of the DU and the RRU. The AMCC device may include a housing, and an AMCC module is disposed within the housing. The housing may be provided with an opening. A port of the AMCC device may be exposed through the opening. The AMCC module is connected to the DU or the RRU respectively through the port of the AMCC device. For example, the port may be an optical fiber port, and the AMCC device may be connected to the DU and/or the RRU via an optical fiber.

In some embodiments, the AMCC device also includes a controlled port. The controlled port is connected to a control device and is used for receiving a control instruction sent by the control device. The AMCC module transmits the predetermined information to the DU and/or the RRU according to the control instruction to control the transmission wavelength between the DU and the RRU.

In this embodiment, the AMCC module is configured to adjust the transmission wavelength between the DU and the RRU by sending predetermined information. In this embodiment, the transmission wavelength is generally an optical wavelength of an optical signal between the DU and the RRU. In this embodiment, the operation of adjusting the transmission wavelength between the DU and the RRU may include at least one of the following:
instructing to switch the transmission wavelength from a first wavelength to a second wavelength to achieve the switch of the transmission wavelength; and
in a case of detecting that an actual transmission wavelength is not a desired transmission wavelength, instructing to correct the transmission wavelength; for example, there may be a variety of manners for instructing to correct the transmission wavelength: a correction command is directly sent to the DU and/or the RRU, the DU and/or the RRU performs the correction according to the desired transmission wavelength stored by itself after receiving the correction command, and an adjustment parameter such as an adjustment amount may need to be determined automatically during the correction process. In other embodiments, since the AMCC module pre-detects a difference between the transmission wavelength between the DU and the RRU and the desired transmission wavelength, the adjustment parameter such as the adjustment amount is known, so the AMCC module may separately send the adjustment parameter to the DU and/or the RRU, or may send an adjustment instruction and the adjustment parameter at the same time. The DU and/or the RRU may adjust the transmission wavelength once having received the adjustment infonnation sent by the AMCC module. The adjustment information includes at least one of the adjustment instruction or the adjustment parameter.

For example, the AMCC device may be an AMCC device disposed on the DU side. Through adding an AMCC signal or an AMCC message corresponding to the predetermined information to a signal transmitted between the DU and the RRU, the AMCC module in the AMCC device may control the adjustment of the transmission wavelength between the DU and the RRU, for example, adjust the optical wavelength of the signal sent by the RRU to the DU, and/or adjust the optical wavelength of the signal sent by the DU to the RRU. Therefore, the AMCC device may enable the DU to have the function of adjusting the transmission wavelength.

This embodiment provides an AMCC device independent of the DU and the RRU, so that even if the DU and/or RRU devices, which have been already installed, are not provided with an AMCC structure for adjusting the transmission wavelength, such an independent AMCC device can be introduced to dynamically switch and/or dynamically correct the transmission wavelength, thereby ensuring flexible deployment of the transmission wavelength and reduction of the adjustment cost. Moreover, the AMCC device also features strong compatibility with the existing art.

For example, the AMCC module may add an instruction to adjust the wavelength in the optical signals transmitted by the DU and the RRU.

In some embodiments, as shown in FIG. 2, the AMCC device may further include a first AWG.

The first AWG is connected to the AMCC module and is configured to couple multi-channel optical signals into a one-channel transmit signal, and/or, to decouple the one-channel receive signal into the multi-channel receive signals and transmit the multi-channel receive signals to the DU or the RRU.

In this embodiment, the AMCC device further includes a first AWG that is connected to the AMCC module. If the AMCC device is located on the DU side, the AWG may also be connected to the DU. If the AMCC device is located on the RRU side, the AWG may also be connected to the RRU. For example, the first AWG is mainly used for coupling multi-channel optical signals of the DU or the RRU into a routed transmit signal that is a composite signal of multi-channel optical signals and that may be transmitted over the main optical fiber between the DU and the RRU, or, for splitting a one-channel receive signal received from the main optical fiber into multi-channel optical signals that are sent to different ports within the DU. In this embodiment, the one-channel receive signal is also a composite signal. In this embodiment, the ports within the DU may be spf ports and may be used for transmitting and receiving optical signals.

In this embodiment, one end of the first AWG may be connected to the DU, and the other end is connected to the AMCC module, that is, the first AWG is located between the DU and the AMCC module. In other embodiments, the AMCC module may also be located between the DU and the first AWG, and the first AWG is connected to the DU through the AMCC module. In FIG. 2, both the first AWG and the second AWG belonging to the AWG may be used for coupling multi-channel optical signals into a one-channel optical signal, and may also be used for decoupling a one-channel optical signal into multi-channel optical signals.

In other embodiments, the AMCC module includes an AMCC signal module.

The AMCC signal module is configured to produce an AMCC signal for indicating the transmission wavelength.

In this embodiment, the AMCC device includes an AMCC signal module which directly generates an AMCC signal. In this case, the AMCC signal may be one of the optical signals that can be transmitted directly over the optical fiber, and may be directly sent to the DU and/or the RRU for the switch and/or correction of the transmission wavelength.

For example, the AMCC signal module is configured to form the AMCC signal by performing top modulation on a modulated signal sent by the DU and/or RRU. In this embodiment, through the top modulation, the AMCC signal can be generated without occupying the additional transmission bandwidth between the DU and the RRU. The top modulation may include: based on the modulated signal previously transmitted by the DU and the RRU, the amplitude of the modulated signal is re-modulated according to the adjustment information to be transmitted, so that the modulated signal carries not only predetermined data to be transmitted between the DU and the RRU, but also the adjustment information. For example, an amplitude of a preset ratio value is added to the modulated signal, and after the DU and/or the RRU receive the optical signal subjected to the top modulation, if the DU and/or RRU detect that an amplitude value of the optical signal satisfies a preset condition that, for example, the amplitude value within certain wavelengths is greater than a preset maximum amplitude value, this optical signal may be considered as a signal carrying not only the predetermined data between the DU and the RRU, but also the adjustment information. When the optical signal is decoded, the optical signal is split based on this preset ratio value, the modulated signal entering between the AMCC signal modules is demodulated so that the predetermined data is demodulated, and according to a difference between the received optical signal and the modulated signal entering between the AMCC signal modules, the adjustment information may be demodulated so that the transmission wavelength between the DU and the RRU is adjusted according to the adjustment information.

In the above embodiments, the AMCC module completes the transmission of the AMCC signal through the top modulation without additional occupation of the transmission bandwidth between the DU and the RRU. In other embodiments, a fixed initial phase may be set between the DU and the RRU when the data is transmitted to achieve signal synchronization. In this embodiment, the AMCC module may change the fixed initial phase so as to perform remodulation through the phase so that the AMCC signal may also be transmitted without additional occupation of the bandwidth. For example, if the modulated signal for transmitting only the predetermined data carries a synchronization signal, the initial phase of the synchronization signal is a first phase. In this embodiment, the AMCC module may change the phase of part of the synchronization signal (for example, change the initial phase of the carrier of the synchronization signal). The amount of the phase to be changed is adapted to the adjustment information that needs to be transmitted. If the initial phase of a certain part of the synchronization signal received by the DU changes, the changed part of the synchronization signal is, in fact, the AMCC signal.

In some embodiments, the AMCC module includes an AMCC message module.

The AMCC message module is configured to produce an AMCC message, where the AMCC message is used for the DU and/or the RRU to form and send an AMCC signal corresponding to the AMCC message, where the AMCC signal is used for controlling the transmission wavelength between the DU and the RRU.

In this embodiment, the AMCC module itself does not directly produce the AMCC signal, but forms the AMCC message. The AMCC message is transmitted to the DU or the RRU, and the DU or the RRU forms the AMCC signal based on the AMCC message. In this way, the DU and RRU transmit the AMCC signal at the same time as they transmit the optical signal of the predetermined data.

In some embodiments, the AMCC module includes: a DU AMCC module, which is configured to adjust a transmit wavelength of the DU; and/or an RRU AMCC module, which is configured to adjust a transmit wavelength of the RRU.

In this embodiment, there is an AMCC module connected to the DU and an AMCC module connected to the RRU. In this embodiment, the DU AMCC is used for adjusting the transmit wavelength of the DU while the RRU AMCC module is used for adjusting the transmit wavelength of the RRU. The DU and the RRU may be controlled separately by using different AMCC modules to adjust the transmit wavelengths of the DU and the RRU separately.

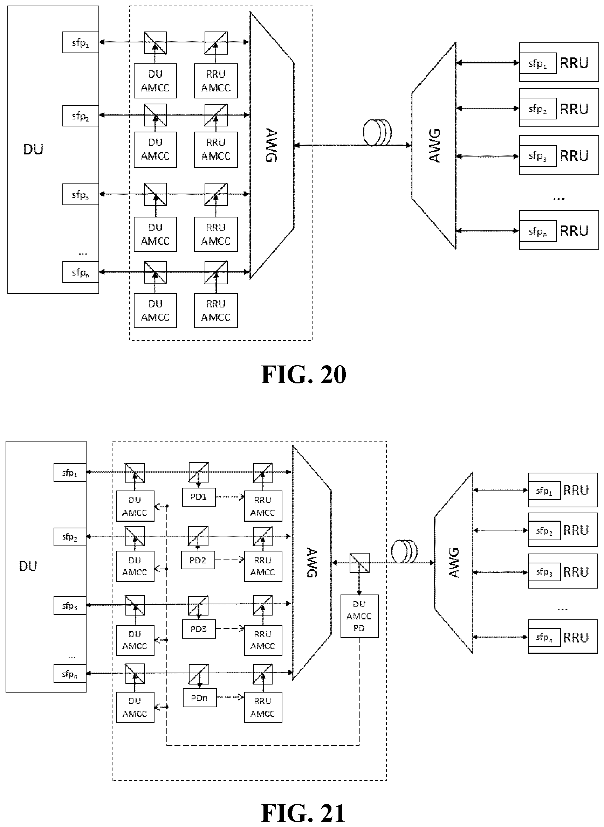

As shown in FIG. 20, the DU AMCC module and the RRU AMCC module are located in the same AMCC device which may be installed on the DU side. When the AMCC device is installed on the DU side, the distance between the AMCC device and the DU is generally shorter than the distance between the AMCC device and the RRU.

As shown in FIG. 3, the AMCC module includes a shared AMCC module.

The shared AMCC module is connected to the DU or the RRU through the first AWG and is configured to form an AMCC signal or an AMCC message; the AMCC signal is formed based on the AMCC message and is used for controlling the transmission wavelength.

In this embodiment, the shared AMCC module may be shared by multiple ports of the DU or the RRU. For example, the first AWG is connected between the shared AMCC module and the DU. Multiple ports on one end of the first AWG are connected to multiple ports of the DU, and the port on the other end of the first AWG is connected to the AMCC module. The shared AMCC module may be used for adjusting the transmission wavelengths of at least two ports on the DU, for example, adjusting the transmission wavelengths of all the ports on a single DU.

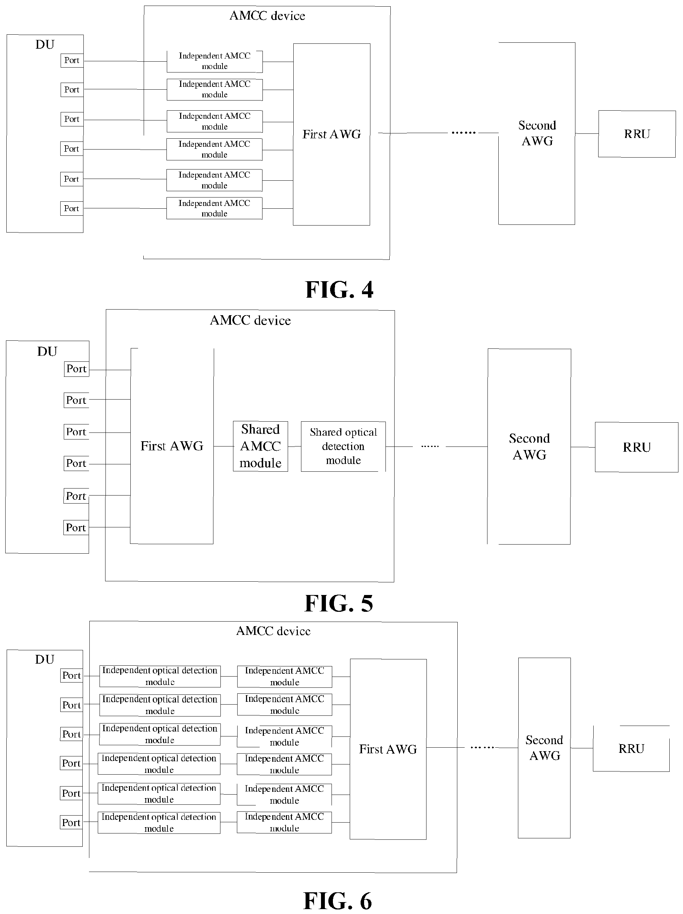

In some embodiments, as shown in FIG. 4, the AMCC module includes an independent AMCC module.

The independent AMCC module is located between the DU and the first AWG and is configured to form an AMCC signal or an AMCC message corresponding to the port of the DU; the AMCC signal is formed based on the AMCC message and is used for controlling the transmission wavelength.

In this embodiment, the AMCC module is the independent AMCC module, and one independent AMCC module is used for the transmission wavelength of one port of the DU. Generally, in this case, if the DU has N ports, and if the transmission wavelength of each port is adjustable, the AMCC device must be provided with at least N independent AMCC modules. The independent AMCC modules are connected between the first AWG and the ports of the DU.

In some embodiments, as shown in FIGS. 5 and 6, the AMCC device further includes an optical detection module.

The optical detection module is configured to detect a transmission wavelength of the RRU.

The AMCC module is connected to the optical detection module and is configured to generate the predetermined information for adjusting the transmission wavelength according to a current transmission wavelength detected by the optical detection module.

In this embodiment, the optical detection module may be various devices capable of detecting the current transmission wavelength in the RRU, such as an optical detector (PD). The PD may detect the power of an optical signal of a corresponding wavelength. If the power of a certain optical signal is lower than a predetermined power value of the desired transmission wavelength, it can be considered that the transmission wavelength is drifted; or if the power of the certain optical signal is lower than a specific power value, it can be considered that the current transmission wavelength is not a predetermined wavelength.

The optical detection module may be a component of the AMCC device, and may be located in the same housing as the AMCC device. The optical detection module may also be separate from the AMCC module, and in use, the optical detection module can be connected to the AMCC module through a wire.

In some embodiments, as shown in FIG. 6, the optical detection module includes an independent optical detection module.

The independent optical detection module is configured to detect a transmit wavelength of one port of the DU and/or the RRU. The independent optical detection module is generally located between one port of the DU and the AWG, for example, on a branch transmission channel formed by a pair of ports of the DU and the RRU, and is configured to detect a transmission wavelength on the branch transmission channel.

In this embodiment, the independent optical detection module is located on a branch transmission channel of a pair of ports connected to the DU and the RRU, that is, one independent optical detection module is configured to detect a transmission wavelength of a pair of transmission ports.

In some embodiments, as shown in FIG. 5, the optical detection module may include a shared optical detection module.

The shared optical detection module is configured to detect transmit wavelengths of at least two ports of the DU or the RRU.

The shared optical detection module may be used on a main transmission channel of the DU and the RRU, and may be used for detecting transmission wavelengths of multiple pairs of transmission ports of the DU and the RRU. The main transmission channel is generally a transmission channel between two AWGs, and what the main transmission channel transmits is not a single-wavelength optical signal but generally a multi-wavelength optical signal.

In this embodiment, generally, each of the DU and the RRU couples multiple ports into a single total port through the AWG, and the main transmission channel is a transmission channel between the total ports of the DU and the RRU. The branch transmission channel may be a transmission channel between the total port and a single port of the DU or a single port of the RRU. In a word, multiple branch transmission channels within the DU may be aggregated by the AWG to form the main transmission channel; and/or, multiple branch transmission channels within the RRU may be aggregated by the AWG to form the main transmission channel.

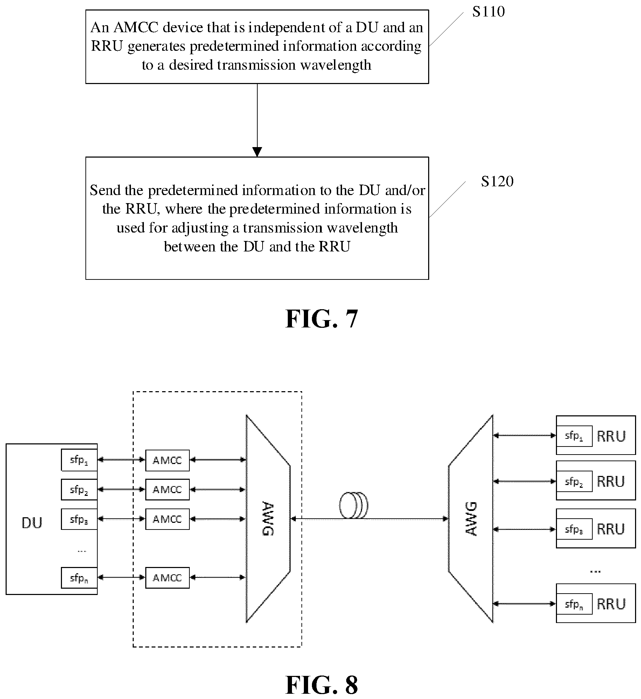

As shown in FIG. 7, this embodiment provides a transmission wavelength adjustment and control method. The method includes steps described below.

In step S110, an AMCC device that is independent of a DU and an RRU generates predetermined information according to a desired transmission wavelength.

In step S120, the predetermined information is sent to the DU and/or the RRU, where the predetermined information is used for adjusting a transmission wavelength between the DU and the RRU.

In this embodiment, the AMCC device may be the AMCC device described in the above embodiments. The AMCC device is used for the switch and/or correction of the transmission wavelength of the DU and/or RRU that cannot be provided with the AMCC function itself or that are not provided with corresponding AMCC hardware, and features easy implementation, low implementation cost, high compatibility with the existing art, and capability of flexibly configuring the transmission wavelength between the DU and the RRU.

In some embodiments, the step S120 may include: an AMCC signal for indicating the transmission wavelength is sent to the DU and/or the RRU.

In this embodiment, the predetermined information is directly an AMCC signal and is an AMCC signal automatically formed by the AMCC module in the AMCC device. In this embodiment, the AMCC signal may be one of optical signals that are transmitted directly between the DU and the RRU.

In some embodiment, a dedicated bandwidth for transmitting the AMCC signal may be set on the DU and the RRU in advance, or the bandwidth for transmitting the predetermined data already existing for the DU and the RRU may be reused.

In some embodiments, the method further includes steps described below.

A modulated signal sent by the DU and/or the RRU is received.

According to the predetermined information, top modulation is performed on the modulated signal and the AMCC signal is generated.

In this embodiment, in order to transmit the AMCC signal without occupying the additional bandwidth, the modulated signal sent by the DU and/or the RRU is readjusted through top modulation to produce a composite optical signal that carries not only the predetermined data previously transmitted by the DU and the RRU but also the predetermined information for adjusting the transmission wavelength.

In some embodiments, the step S120 can include the step described below.

An AMCC message is sent to the DU and/or the RRU, where the AMCC message is used for the DU and/or the RRU to form and send an AMCC signal corresponding to the AMCC message, where the AMCC signal is used for controlling the transmission wavelength between the DU and the RRU.

In this embodiment, the AMCC device only sends the AMCC message to the DU and/or the RRU; the DU and/or the RRU forms the corresponding AMCC signal based on the AMCC message, and then the transmission wavelength is directly sent between the DU and the RRU.

In some embodiments, the method further includes: a current transmission wavelength between the DU and the RRU is detected.

The step S110 may include that the AMCC device generates the predetermined information according to the current transmission wavelength and the desired transmission wavelength.

In the embodiments of the present application, the current transmission wavelength between the DU and the RRU may be detected by using an optical detection module such as a PD. For example, if the current transmission wavelength is not the desired transmission wavelength, the AMCC signal or the AMCC message facilitates the adjustment of the transmission wavelength between the DU and the RRU.

The embodiments of the present application provide an AMCC device disposed on the DU side to manage transmit wavelengths of the DU and the RRU by adding an AMCC message to a signal or additionally adding an AMCC function of a signal control optical module. The AMCC device may be used in a DU that does not have the AMCC function of a control optical module, and the DU side may also use an adjustable optical module. Several specific examples are provided below in conjunction with any of the above embodiments, in which the transmission direction from the DU to the RRU is referred to as downstream, and the transmission direction from the RRU to the DU is referred to as upstream.

### Example one (not part of the present invention)

The optical modules on the DU end adopt a fixed wavelength, and the AMCC unit manages the transmit wavelength of the RRU by re-modulating the DU transmit signal in each channel and adding an AMCC channel management message outside the signal bandwidth.

As shown in FIG. 8, the AMCC device provided in this example, as illustrated in the dashed box, includes AMCC modules and an AWG. A signal in one channel of the DU is re-modulated when passing through the AMCC module, and the AMCC message is added. This message is not within the communication bandwidth, and thus does not occupy the communication bandwidth.

The AMCC module may be implemented with a variable optical attenuator (VOA), the modulated optical signal is subject to top modulation with an amplitude not greater than 10%, or the AMCC module may also be implemented in other manners. The RRU connected to a certain port of the AWG receives this signal, performs demodulation to obtain the AMCC message, adjusts its own transmit wavelength to a wavelength specified by the AMCC message, and transmits a signal to the DU, thereby achieving the communication between the DU and the RRU.

Meanwhile, the AMCC module may monitor in real time the optical power of an upstream optical signal transmitted by the RRU in each channel after the optical signal passes through the AWG. If the wavelength of the light transmitted by the RRU is drifted, the optical power of the optical signal after passing through the AWG will be weakened. In this case, the AMCC module re-adds the AMCC message to the downstream optical signal to control the upstream transmit optical wavelength of the RRU back to the correct wavelength.

### Example two (not part of the present invention)

The DU end adopts a fixed wavelength, and the AMCC device uses an additional optical signal to control the optical module of the DU to send an AMCC channel management message to the RRU to manage the transmit wavelength of the RRU.

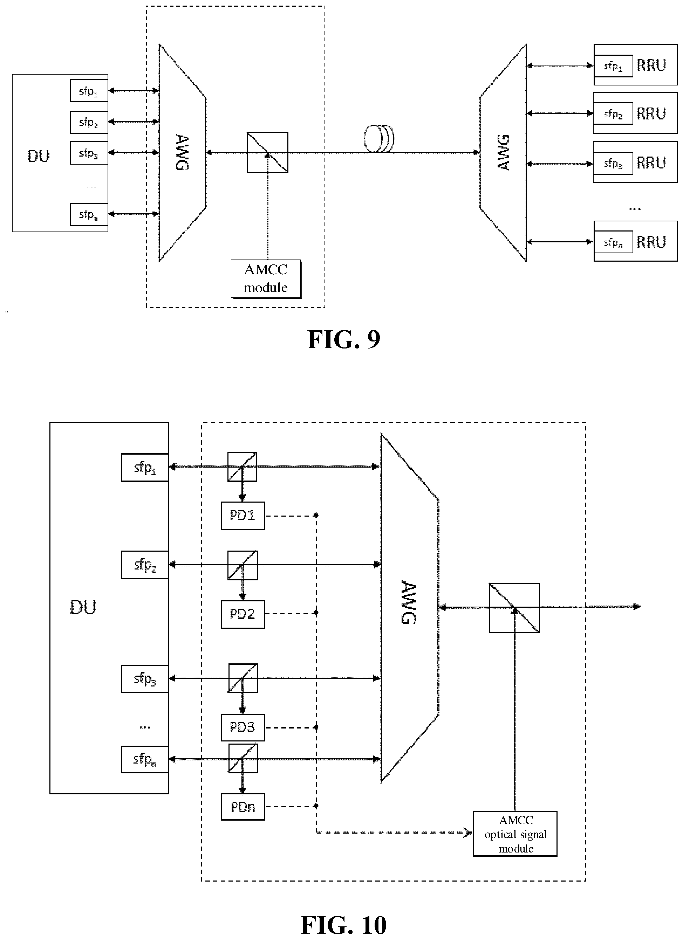

The AMCC device provided in this example, as illustrated in the dashed box, includes an AMCC module and an AWG. As shown in FIG. 9, the AMCC module may transmit all upstream optical signal wavelengths of n channels, and may also transmit n wavelengths of non-upstream optical wavebands that can pass through ports of the AWG.

The AMCC module may be implemented with an array laser, or may be implemented with a tunable laser, or may be implemented in other manners.

When the AMCC device needs to configure a certain channel such as an i-th channel, the AMCC module transmits an upstream optical signal of the i-th channel to the DU. This optical signal is first coupled into the backbone optical fiber, then comes out from an i-th port of the AWG, and finally is received by an optical module corresponding to the i-th channel of the DU. This optical signal notifies the i-th optical module of the DU to enable the AMCC function and sends an AMCC message downstream, which can be achieved by writing a register value of a modification and control optical module or achieved in other manners.

The RRU, after receiving the AMCC message sent from the DU, adjusts its own transmit wavelength to a corresponding channel, so as to establish a communication link with the DU. This method uses the AMCC function of the optical module within the DU, while the AMCC module itself does not generate the AMCC message, but only notifies the optical module on the DU end to send the AMCC message.

The purpose of monitoring the transmit wavelength of the RRU can be achieved by splitting part of light from each port of the AWG connected to the DU in the AMCC device to monitor the upstream optical power. If a certain transmit wavelength of the RRU has an offset, the receiving optical power of the corresponding PD becomes smaller. The PD sends this message to the AMCC module. The AMCC module controls the optical module of the DU on a corresponding channel to send the AMCC message downstream. The transmit wavelength of the RRU is adjusted so that the PD value of this channel reaches the maximum. The RRU transmits an optical signal having the correct wavelength.

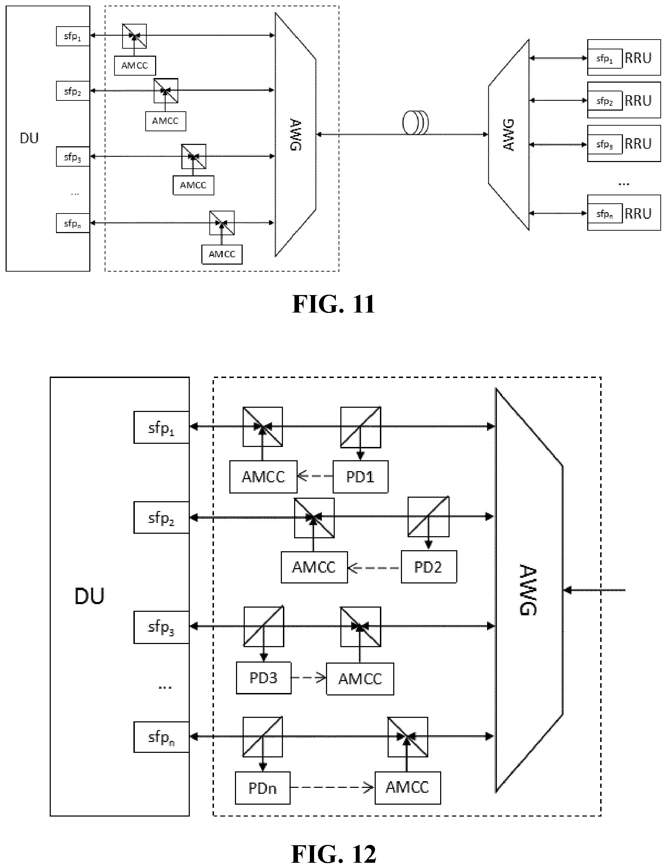

In FIG. 9, information of the control optical module is added to the backbone optical fiber by using an AMCC module, and then arrives in the optical module on the DU through the AWG. The structure shown in FIG. 11 may also be adopted. One AMCC module is added to each channel of optical fiber after the AWG, so that the AMCC module does not need to transmit multiple wavelengths, but only needs to transmit the wavelength of the corresponding channel. If the optical module of the DU receives the broad spectrum, the wavelength transmitted by each AMCC may be the same.

As shown in FIGS. 10 and 12, the purpose of monitoring the transmit wavelength of the RRU can be achieved by splitting part of light from each port of the AWG connected to the DU in the AMCC device to monitor the upstream optical power. If a certain transmit wavelength of the RRU has an offset, the receiving optical power of the corresponding PD becomes smaller. The PD sends this message to the AMCC module. The AMCC module controls the DU optical module on a corresponding channel to send downstream the AMCC message. The transmit wavelength of the RRU is adjusted so that the PD value of this channel reaches the maximum. The RRU transmits an optical signal having the correct wavelength. In FIG. 12, the PD includes PD1 to PDn, and the specific number of PDs in the specific implementation may be determined according to the type of PD and the number of independent AMCC modules. The PD shown in FIG. 12 is one type of the independent optical detection modules, and the AMCC module shown in FIG. 12 may be one type of the independent AMCC modules.

### Example three (not part of the present invention)

In this example, the DU end adopts a fixed wavelength, and the AMCC device uses an additional optical signal to provide AMCC channel information for the RRU.

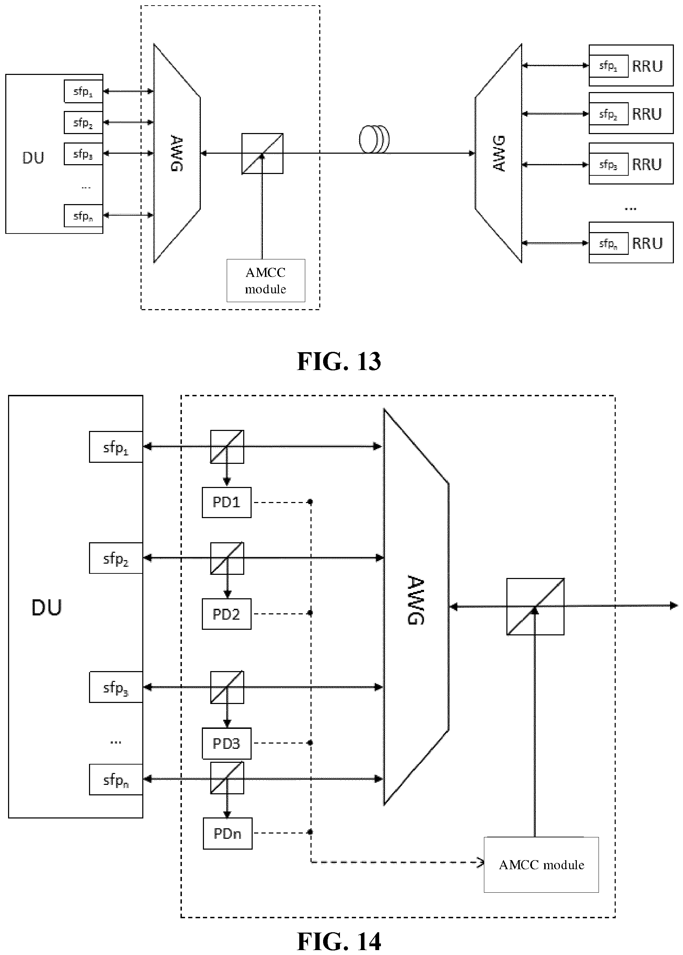

The AMCC device provided in this example, as illustrated in the dashed box in FIG. 13, includes an AMCC module and an AWG. The AMCC module may transmit all downstream signal optical wavelengths of n channels, and may also transmit wavelengths of non-downstream wavebands that can pass through ports of the AWG. The AMCC module may be implemented with an array laser, or may be implemented with a tunable laser.

When a certain channel such as an i-th channel needs to be managed, the AMCC module sends an AMCC message of the i-th channel downstream. The AMCC signal is first coupled into the backbone optical fiber, then passes through the AWG, and enters the optical module of the RRU through an i-th port of the AWG. The RRU receives this signal and then adjusts the optical module to a transmit wavelength corresponding to the i-th channel.

As shown in FIGS. 10 and 14, the purpose of monitoring the transmit wavelength of the RRU can be achieved by splitting part of light from each port of the AWG connected to the DU in the AMCC device to monitor the upstream optical power. If a certain transmit wavelength of the RRU has an offset, the receiving optical power of the corresponding PD becomes smaller. The PD sends this message to the AMCC module. The AMCC module sends an AMCC message downstream. The transmit wavelength of the RRU is adjusted so that the PD value of this channel reaches the maximum. The RRU transmits an optical signal having the correct wavelength.

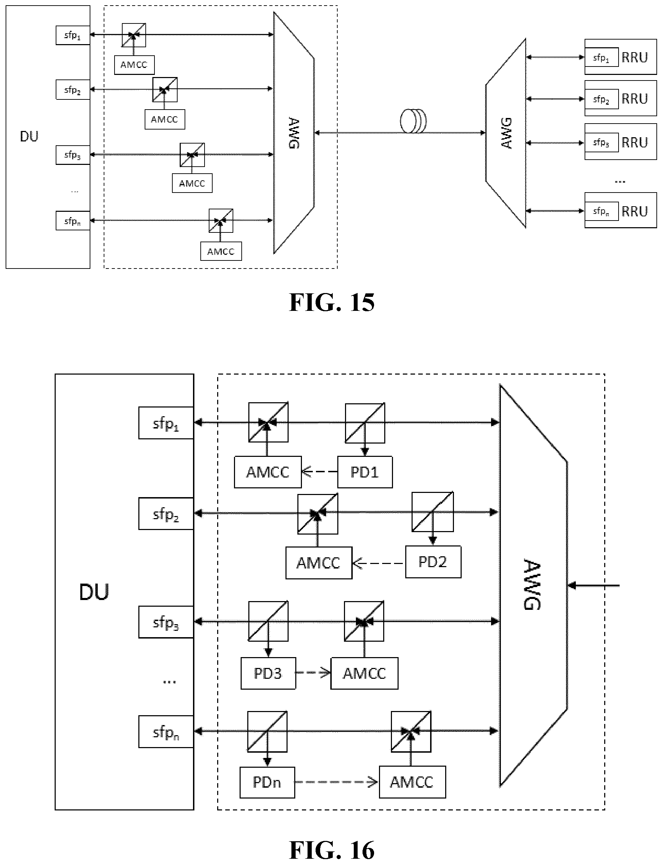

In FIG. 13, AMCC information is added to the backbone optical fiber by an AMCC module, and then passes through the AWG and arrives at the optical module of the RRU. The structure shown in FIG. 15 may also be adopted. One AMCC module is added to each channel of optical fiber between the DU and the AWG, so that the AMCC module does not need to transmit multiple wavelengths, but only needs to transmit the wavelength of the corresponding channel.

As shown in FIGS. 14 and 16, the purpose of monitoring the RRU transmit wavelength can be achieved by splitting part of light from each port of the AWG connected to the DU in the AMCC device to monitor the upstream optical power. If a certain transmit wavelength of the RRU has an offset, the receiving optical power of the corresponding PD becomes smaller. The PD sends this message to the AMCC module. The AMCC module sends an AMCC message downstream. The transmit wavelength of RRU is adjusted so that the PD value of this channel reaches the maximum. The RRU transmits an optical signal having the correct wavelength.

### Example four

The DU end adopts an adjustable optical module. The AMCC device first configures the transmit wavelength of the DU, adds an AMCC message by re-modulating a DU downstream signal, and configures the transmit wavelength of the RRU.

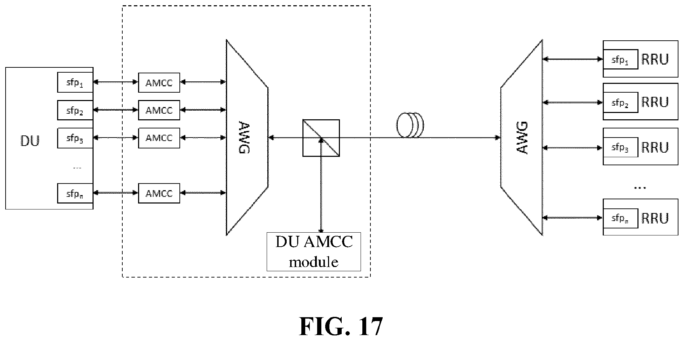

As shown in FIG. 17, the AMCC module of the DU may transmit all light at wavelengths that passes through the AWG port, and the light may be in the upstream signal optical waveband or not. The AMCC module may be an array laser, or may be a tunable laser. The AMCC module of the DU first configures the transmit wavelength of each optional module of the DU. After the transmit wavelength is configured, the DU transmits downstream light. The AMCC module re-modulates each downstream light, adds the AMCC message, and configures the transmit wavelength of the RRU.

In addition to sending optical signals to the optical module of the DU to configure the wavelength, the DU AMCC module may also split part of the downstream light on the backbone fiber to monitor whether wavelength drift occurs on each channel of the DU. One AWG may be integrated inside the DU AMCC module to split the downstream light to be monitored by n PDs separately. If the optical power of a certain channel becomes small, it indicates that the wavelength drift occurs on the corresponding channel, and the DU AMCC module sends an AMCC message to the DU and adjusts the wavelength value of that channel back to the correct position.

The monitoring of the downstream signal optical wavelength may be implemented through the optical module of the RRU. The optical module of the RRU monitors the receiving optical power, and if the receiving optical power becomes smaller, wavelength drift occurs on the downstream light of that channel. The optical module of the RRU sends an AMCC message upstream, and adjusts the wavelength of the optical module of the DU end back to the correct position.

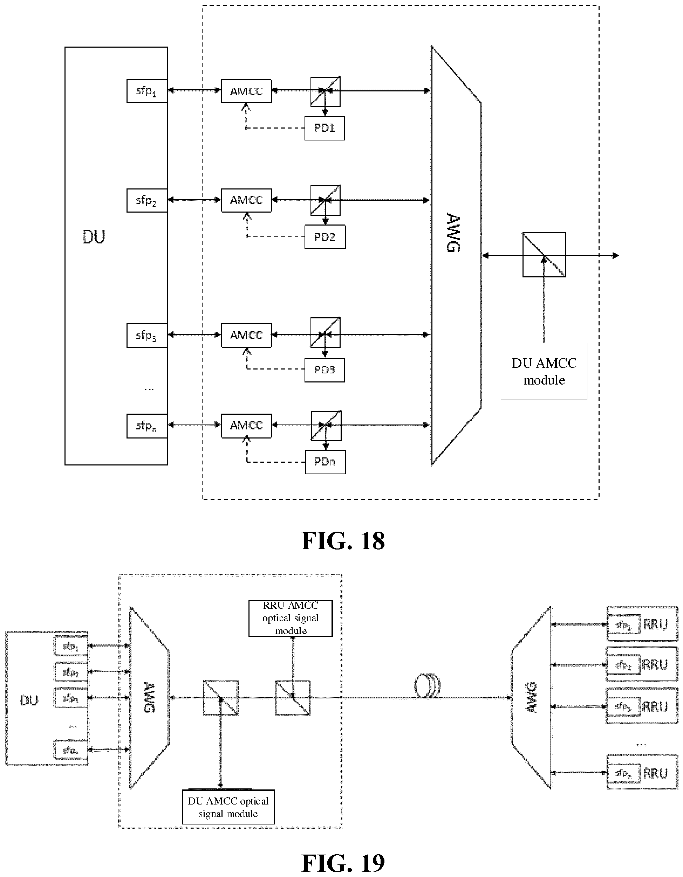

In FIG. 18, the purpose of monitoring the transmit wavelength of the RRU can be achieved by splitting part of light from each port of the AWG connected to the DU in the AMCC device to monitor the upstream optical power. If a certain transmit wavelength of the RRU has an offset, the receiving optical power of the corresponding PD becomes smaller. The PD sends this message to the AMCC module. The AMCC module adds an adjustment AMCC to a downstream signal. The transmit wavelength of RRU is adjusted so that the PD value of this channel reaches the maximum. The RRU transmits an optical signal having the correct wavelength.

### Example five

The DU adopts an adjustable optical module, and the AMCC device configures transmit wavelengths of the DU and the RRU respectively through optical signals.

As shown in FIG. 19, each optical module in the DU is an adjustable transmitting module; and the AMCC device, as illustrated in the dashed box, contains an AWG, a DU AMCC module and an RRU AMCC module. The DU AMCC module may send an AMCC signal upstream, and configures the transmit wavelength of each optical module of the DU. The RRU AMCC module may send an AMCC signal downstream, and configures the transmit wavelength of the optical module of the RRU. Both AMCC modules may transmit n channels of wavelength signals upstream or downstream through an array laser or a tunable laser.

When the signal wavelength of a certain channel such as an i-th channel of the DU is configured, the DU AMCC module transmits an upstream AMCC signal of the i-th channel to the DU. This optical signal is first coupled into the backbone optical fiber, then comes out from an i-th port of the AWG, and finally is received by an optical module corresponding to the i-th channel of the DU. This optical module adjusts the transmit wavelength to an AMCC-specified wavelength.

Similarly, when a certain transmit wavelength of the RRU, for example, a transmit wavelength of a j-th channel, is configured, the RRU AMCC module sends an AMCC message of the j-th channel downstream. The AMCC signal is first coupled into the backbone optical fiber, then passes through the AWG, and enters the optical module of the RRU through a j-th port of the AWG. The RRU receives this signal and then adjusts the optical module to a transmit wavelength corresponding to the j-th channel.

In addition to sending optical signals to the optical module of the DU to configure the wavelength, the DU AMCC module may also split part of the downstream light on the backbone fiber to detect whether wavelength drift occurs on each channel of the DU. One AWG may be integrated inside the DU AMCC module to split the downstream light to be monitored by n PDs separately. If the optical power of a certain channel becomes small, it indicates that the wavelength drift occurs on the corresponding channel, and the DU AMCC module sends an AMCC message to the DU and adjusts the wavelength value of that channel back to the correct position. Similarly, the RRU AMCC module can also have the same wavelength monitoring function. In FIG. 19, AMCC information is added to the backbone optical fiber by using two AMCC signal modules, and then passes through the AWG and arrives at the optical modules on the DU and the RRU. The structure shown in FIG. 20 may also be adopted. Two AMCC modules are added to each channel of optical fiber between the DU and the AWG, so that the AMCC modules do not need to transmit multiple wavelengths, but only need to transmit the wavelength of the corresponding channel.

The structure shown in FIG. 21 may be used in the system shown in FIG. 20 to detect whether upstream and downstream wavelengths are drifted. For the upstream, part of light is split from the optical fiber of each channel between the DU and the AWG divides to be detected by each PD for optical power. If the optical power of a certain channel becomes smaller, it indicates that the wavelength drift occurs in this channel. The RRU AMCC module sends an AMCC message downstream to adjust the transmit wavelength of the RRU so that the PD receiving optical power reaches the maximum. For the downstream, there is a DU AMCC PD after the AWG, which may detect the optical power of each downstream channel. If the optical power of a certain channel becomes smaller, the DU AMCC module of the corresponding channel adjusts the wavelength of the optical module of the DU in a corresponding channel to the correct position.

In a case where the DU and the RRU have the AMCC function, the upstream and downstream wavelengths can be detected by the optical modules of the DU and the RRU themselves after a communication link is established. For the downstream, when the RRU detects that the receiving optical power becomes smaller, the RRU sends an AMCC message upstream to adjust the transmit wavelength of the DU. For the upstream, when the DU detects that the receiving optical power becomes smaller, the DU sends an AMCC message downstream to adjust the transmit wavelength of the RRU.

### Example six

The DU end adopts an adjustable optical module, and the AMCC device first configures the transmit wavelength of the DU through the optical signal and then notifies the DU to configure the transmit wavelength of the RRU.

This example is similar to Example two, and the difference between them is that the transmit wavelength of the module of the DU end in Example two is fixed while the wavelength of the DU end needs to be configured in this example. The role of the AMCC module in Example two is to activate the AMCC function of the optical module of the DU to enable the optical module to send the AMCC message. The difference of this example from Example two is that in addition to the function in Example two, the AMCC module also has a function to first send the AMCC message to configure the transmit wavelength of the DU end.

### Example seven

The DU adopts an adjustable optical module, and the AMCC device first configures the transmit wavelength of the RRU through the optical signal and then configures the transmit wavelength of the DU through the RRU.

This example is similar to Example three, and the difference between them is that the optical module of the RRU in this example also has the function of sending the AMCC message. In addition to the function of sending the AMCC message to configure the transmit wavelength described in Example three, the AMCC module in this example also has the function of activating the AMCC of the optical module of the RRU while sending the AMCC message.

It should be understood that the equipments and the methods disclosed in the embodiments of the present application may be implemented in other manners. The equipment embodiments described above are only illustrative. For example, the division of units is only a division of logical functions, and, in practice, the division of units may be implemented in other manners. For example, multiple units or components may be combined or may be integrated into another system, or some features may be omitted or not executed. In addition, coupling, direct coupling or communication connections between the presented or discussed components may be indirect coupling or communication connections via interfaces, equipments or units, and may be electrical, mechanical or in other forms.

The units described above as separate components may or may not be physically separated. Components presented as units may or may not be physical units, i.e., may be located in one place or may be distributed over multiple network units. Part or all of these units may be selected according to practical requirements to achieve objects of solutions of embodiments of the present application.

Moreover, various function units in the embodiments of the present application may all be integrated in one processing module, or each unit may be used as a separate unit, or two or more units may be integrated into one unit. The integrated unit may be implemented by hardware or may be implemented by hardware plus a software function unit.

It should be understood by those skilled in the art that all or part of the steps in the method embodiments described above may be implemented by hardware instructed by relevant programs, the preceding programs may be stored in a computer-readable storage medium and, when executed, these programs execute steps included in the method embodiments described above; and the preceding storage medium includes: a mobile storage device, a read-only memory (ROM), a random access memory (RAM), a magnetic disk, an optical disk or another medium capable of storing program codes.

The above are only embodiments of the present application and are not intended to limit the scope of the present application. It is easy for those skilled in the art to conceive modifications or substitutions within the scope of the present application. The scope of the present application is subject to the scope of the appended claims.

## Claims

1. An auxiliary management and control channel, AMCC, device, independent of a distribution unit, DU, and a radio remote unit, RRU, **characterized by** comprising:
an AMCC module including an AMCC signal module or an AMCC message module connected to the DU or the RRU through a port of the AMCC device, configured to adjust a transmission wavelength of the DU and the RRU by sending predetermined information to the DU and/or the RRU, wherein the predetermined information is used for adjusting a transmission wavelength of the DU and the RRU, wherein the predetermined information corresponds to an AMCC signal or an AMCC message;
wherein
sending the predetermined information to the DU and/or the RRU comprises: the AMCC signal module configured to send the AMCC signal to the DU and/or the RRU, wherein the AMCC signal is used for controlling the transmission wavelength of the DU and the RRU; or
the AMCC message module configured to send an AMCC message to the DU and/or the RRU, wherein the AMCC message is used by the DU and/or the RRU to form and send the AMCC signal corresponding to the AMCC message.

2. The device of claim 1, further comprising:
a first arrayed waveguide grating, which is connected to the AMCC module and is configured to couple multi-channel optical signals into a one-channel transmit signal, and/or, to decouple a one-channel receive signal into multi-channel receive signals and transmit the multi-channel receive signals to the DU or the RRU.

3. The device of claim 2, wherein the AMCC signal module is configured to form the AMCC signal by performing top modulation on a modulated signal sent by the DU and/or the RRU.

4. The device of claim 1, wherein the AMCC module comprises:
a DU AMCC module, which is configured to adjust a transmit wavelength of the DU; and/or
an RRU AMCC module, which is configured to adjust a transmit wavelength of the RRU.

5. The device of claim 2 or 3, wherein the AMCC module comprises:
a shared AMCC module, which is connected to the DU or the RRU through the first arrayed waveguide grating and is configured to form an AMCC signal or an AMCC message; wherein the AMCC signal is formed based on the AMCC message and is used for controlling the transmission wavelength.

6. The device of claim 2 or 3, wherein the AMCC module comprises:
an independent AMCC module, which is located between the DU and the first arrayed waveguide grating or between the RRU and the first arrayed waveguide grating and is configured to form an AMCC signal or an AMCC message; wherein the AMCC signal is formed based on the AMCC message and is used for controlling the transmission wavelength.

7. The device of claim 1, wherein the AMCC device further comprises:
an optical detection module, which is configured to detect a transmission wavelength of the RRU;
wherein the AMCC module is connected to the optical detection module and is configured to generate the predetermined information for adjusting the transmission wavelength according to a current transmission wavelength detected by the optical detection module.

8. The device of claim 7, wherein the optical detection module comprises:
an independent optical detection module, which is configured to detect a transmit wavelength of one port of the DU and/or the RRU;
or
a shared optical detection module, which is configured to detect transmit wavelengths of at least two ports of the DU or the RRU.

9. A transmission wavelength adjustment and control method, **characterized by** comprising:
generating (S110), by an auxiliary management and control channel, AMCC, device independent of a distribution unit, DU, and a radio remote unit, RRU, predetermined information according to a desired transmission wavelength; and
sending (S120), by the AMCC device, the predetermined information to the DU and/or the RRU, wherein the predetermined information is used for adjusting a transmission wavelength of the DU and the RRU, wherein the predetermined information corresponds to an AMCC signal or an AMCC message; wherein
sending the predetermined information to the DU and/or the RRU comprises:
sending the AMCC signal to the DU and/or the RRU, wherein the AMCC signal is used for controlling the transmission wavelength of the DU and the RRU; or
sending the AMCC message to the DU and/or the RRU, wherein the AMCC message is used by the DU and/or the RRU to form and send the AMCC signal corresponding to the AMCC message.

10. The method of claim 9, comprising:
receiving a modulated signal sent by the DU and/or the RRU; and
according to the predetermined information, performing top modulation on the modulated signal and generating the AMCC signal.

11. The method of claim 9, further comprising:
detecting a current transmission wavelength between the DU and the RRU;
wherein generating, by the AMCC device independent of the DU and the RRU, the predetermined information according to the desired transmission wavelength comprises:
generating, by the AMCC device, the predetermined information according to the current transmission wavelength and the desired transmission wavelength.

## Patentansprüche

1. Hilfsmanagement- und -steuerkanal (Auxiliary Management and Control Channel, AMCC)-Vorrichtung, die von einer Verteilungseinheit (Distribution Unit, DU) und einer räumlich abgesetzten Funkeinheit (Radio Remote Unit, RRU) unabhängig ist, **dadurch gekennzeichnet, dass** sie umfasst:
ein AMCC-Modul, das ein AMCC-Signalmodul oder ein AMCC-Nachrichtenmodul enthält, das mit der DU oder der RRU über einen Port der AMCC-Vorrichtung verbunden ist, und dafür konfiguriert ist, eine Sendewellenlänge der DU und der RRU durch Senden zuvor festgelegter Informationen an die DU und/oder die RRU zu justieren, wobei die zuvor festgelegten Informationen dafür verwendet werden, eine Sendewellenlänge der DU und der RRU zu justieren, wobei die zuvor festgelegten Informationen einem AMCC-Signal oder einer AMCC-Nachricht entsprechen;
wobei das Senden der zuvor festgelegten Informationen an die DU und/oder die RRU umfasst:
dass das AMCC-Signalmodul dafür konfiguriert ist, das AMCC-Signal an die DU und/oder die RRU zu senden, wobei das AMCC-Signal zum Steuern der Sendewellenlänge der DU und der RRU verwendet wird; oder
dass das AMCC-Nachrichtenmodul dafür konfiguriert ist, eine AMCC-Nachricht an die DU und/oder die RRU zu senden, wobei die AMCC-Nachricht durch die DU und/oder die RRU dafür verwendet wird, das der AMCC-Nachricht entsprechende AMCC-Signal zu bilden und zu senden.

2. Vorrichtung nach Anspruch 1, die des Weiteren umfasst:
ein erstes Zeilen-Wellenleiter-Gitter, das mit dem AMCC-Modul verbunden ist und dafür konfiguriert ist, optische Mehrkanalsignale zu einem Einkanal-Sendesignal zu koppeln und/oder ein Einkanal-Empfangssignal zu Mehrkanal-Empfangssignalen zu entkoppeln und die Mehrkanal-Empfangssignale an die DU oder die RRU zu senden.

3. Vorrichtung nach Anspruch 2, wobei das AMCC-Signalmodul dafür konfiguriert ist, das AMCC-Signal zu bilden, indem es eine Top-Modulation an einem modulierten Signal durchführt, das durch die DU und/oder die RRU gesendet wird.

4. Vorrichtung nach Anspruch 1, wobei das AMCC-Modul umfasst:
ein DU-AMCC-Modul, das dafür konfiguriert ist, eine Sendewellenlänge der DU zu justieren; und/oder
ein RRU-AMCC-Modul, das dafür konfiguriert ist, eine Sendewellenlänge der RRU zu justieren.

5. Vorrichtung nach Anspruch 2 oder 3, wobei das AMCC-Modul umfasst:
ein gemeinsam genutztes AMCC-Modul, das mit der DU oder der RRU über das erste Zeilen-Wellenleiter-Gitter verbunden ist und dafür konfiguriert ist, ein AMCC-Signal oder eine AMCC-Nachricht zu bilden; wobei das AMCC-Signal auf der Grundlage der AMCC-Nachricht gebildet wird und zum Steuern der Sendewellenlänge verwendet wird.

6. Vorrichtung nach Anspruch 2 oder 3, wobei das AMCC-Modul umfasst:
ein unabhängiges AMCC-Modul, das sich zwischen der DU und dem ersten Zeilen-Wellenleiter-Gitter oder zwischen der RRU und dem ersten Zeilen-Wellenleiter-Gitter befindet und dafür konfiguriert ist, ein AMCC-Signal oder eine AMCC-Nachricht zu bilden; wobei das AMCC-Signal auf der Grundlage der AMCC-Nachricht gebildet wird und zum Steuern der Sendewellenlänge verwendet wird.

7. Vorrichtung nach Anspruch 1, wobei die AMCC-Vorrichtung des Weiteren umfasst:
ein optisches Detektionsmodul, das dafür konfiguriert ist, eine Sendewellenlänge der RRU zu detektieren;
wobei das AMCC-Modul mit dem optischen Detektionsmodul verbunden ist und dafür konfiguriert ist, die zuvor festgelegten Informationen zum Justieren der Sendewellenlänge gemäß einer durch das optische Detektionsmodul detektierten momentanen Sendewellenlänge zu generieren.

8. Vorrichtung nach Anspruch 7, wobei das optische Detektionsmodul umfasst:
ein unabhängiges optisches Detektionsmodul, das dafür konfiguriert ist, eine Sendewellenlänge eines einzelnen Ports der DU und/oder der RRU zu detektieren; oder
ein gemeinsam genutztes optisches Detektionsmodul, das dafür konfiguriert ist, Sendewellenlängen von mindestens zwei Ports der DU oder der RRU zu detektieren.

9. Verfahren zum Justieren und Steuern der Sendewellenlänge, **dadurch gekennzeichnet, dass** es umfasst:
Generieren (S110), durch eine Hilfsmanagement- und - steuerkanal (Auxiliary Management and Control Channel, AMCC)-Vorrichtung, die von einer Verteilungseinheit (Distribution Unit, DU) und einer räumlich abgesetzten Funkeinheit (Radio Remote Unit, RRU) unabhängig ist, von zuvor festgelegten Informationen gemäß einer gewünschten Sendewellenlänge; und
Senden (S120), durch die AMCC-Vorrichtung, der zuvor festgelegten Informationen an die DU und/oder die RRU, wobei die zuvor festgelegten Informationen zum Justieren einer Sendewellenlänge der DU und der RRU verwendet wird, wobei die zuvor festgelegten Informationen einem AMCC-Signal oder einer AMCC-Nachricht entsprechen;
wobei das Senden der zuvor festgelegten Informationen an die DU und/oder die RRU umfasst:
Senden des AMCC-Signals an die DU und/oder die RRU, wobei das AMCC-Signal zum Steuern der Sendewellenlänge der DU und der RRU verwendet wird; oder
Senden der AMCC-Nachricht an die DU und/oder die RRU, wobei die AMCC-Nachricht durch die DU und/oder der RRU dafür verwendet wird, das der AMCC-Nachricht entsprechende AMCC-Signal zu bilden und zu senden.

10. Verfahren nach Anspruch 9, das umfasst:
Empfangen eines modulierten Signals, das durch die DU und/oder die RRU gesendet wird; und
gemäß den zuvor festgelegten Informationen, Durchführen einer Top-Modulation an dem modulierten Signal und Generieren des AMCC-Signals.

11. Verfahren nach Anspruch 9, das des Weiteren umfasst:
Detektieren einer momentanen Sendewellenlänge zwischen der DU und der RRU;
wobei das Generieren, durch die AMCC-Vorrichtung, die von der DU und der RRU unabhängig ist, der zuvor festgelegten Informationen gemäß der gewünschten Sendewellenlänge umfasst:
Generieren, durch die AMCC-Vorrichtung, der zuvor festgelegten Informationen gemäß der momentanen Sendewellenlänge und der gewünschten Sendewellenlänge.

## Revendications

1. Dispositif de canal de gestion et de commande auxiliaire, AMCC, indépendant d'une unité de distribution, DU, et d'une unité radio distante, RRU, **caractérisé en ce qu'**il comprend :
un module AMCC comportant un module de signal AMCC ou un module de message AMCC connecté à la DU ou la RRU par l'intermédiaire d'un port du dispositif AMCC, configuré pour ajuster une longueur d'onde de transmission de la DU et la RRU en envoyant des informations prédéterminées à la DU et/ou la RRU, dans lequel les informations prédéterminées sont utilisées pour l'ajustement d'une longueur d'onde de transmission de la DU et la RRU, dans lequel les informations prédéterminées correspondent à un signal AMCC ou un message AMCC ;
dans lequel
l'envoi des informations prédéterminées à la DU et/ou la RRU comprend : le module de signal AMCC configuré pour envoyer le signal AMCC à la DU et/ou la RRU, dans lequel le signal AMCC est utilisé pour commander la longueur d'onde de transmission de la DU et la RRU ; ou
le module de message AMCC configuré pour envoyer un message AMCC à la DU et/ou la RRU, dans lequel le message AMCC est utilisé par la DU et/ou la RRU pour former et envoyer le signal AMCC correspondant au message AMCC.

2. Dispositif selon la revendication 1, comprenant en outre :
un premier réseau sélectif planaire, qui est connecté au module AMCC et est configuré pour coupler des signaux optiques multicanaux en un signal de transmission monocanal et/ou pour découpler un signal de réception monocanal en signaux de réception multicanaux et transmettre les signaux de réception multicanaux à la DU ou la RRU.

3. Dispositif selon la revendication 2, dans lequel le module de signal AMCC est configuré pour former le signal AMCC en réalisant une modulation de sommet sur un signal modulé envoyé par la DU et/ou la RRU.

4. Dispositif selon la revendication 1, dans lequel le module AMCC comprend :
un module AMCC de DU, qui est configuré pour ajuster une longueur d'onde de transmission de la DU ;
et/ou
un module AMCC de RRU, qui est configuré pour ajuster une longueur d'onde de transmission de la RRU.

5. Dispositif selon la revendication 2 ou 3, dans lequel le module AMCC comprend :
un module AMCC partagé, qui est connecté à la DU ou la RRU par l'intermédiaire du premier réseau sélectif planaire et est configuré pour former un signal AMCC ou un message AMCC ; dans lequel le signal AMCC est formé sur la base du message AMCC et est utilisé pour commander la longueur d'onde de transmission.

6. Dispositif selon la revendication 2 ou 3, dans lequel le module AMCC comprend :
un module AMCC indépendant, qui est disposé entre la DU et le premier réseau sélectif planaire ou entre la RRU et le premier réseau sélectif planaire et est configuré pour former un signal AMCC ou un message AMCC ; dans lequel le signal AMCC est formé sur la base du message AMCC et est utilisé pour commander la longueur d'onde de transmission.

7. Dispositif selon la revendication 1, dans lequel le dispositif AMCC comprend en outre :
un module de détection optique, qui est configuré pour détecter une longueur d'onde de transmission de la RRU ;
dans lequel le module AMCC est connecté au module de détection optique et est configuré pour générer les informations prédéterminées pour l'ajustement de la longueur d'onde de transmission en fonction d'une longueur d'onde de transmission actuelle détectée par le module de détection optique.

8. Dispositif selon la revendication 7, dans lequel le module de détection optique comprend :
un module de détection optique indépendant, qui est configuré pour détecter une longueur d'onde de transmission d'un port de la DU et/ou de la RRU ;
ou
un module de détection optique partagé, qui est configuré pour détecter des longueurs d'onde de transmission d'au moins deux ports de la DU ou de la RRU.

9. Procédé d'ajustement et de commande de longueur d'onde de transmission, **caractérisé en ce qu'**il comprend :
la génération (S110), par un dispositif de canal de gestion et de commande auxiliaire, AMCC, indépendant d'une unité de distribution, DU, et d'une unité radio distante, RRU, d'informations prédéterminées en fonction d'une longueur d'onde de transmission souhaitée ; et
l'envoi (S120), par le dispositif AMCC, des informations prédéterminées à la DU et/ou la RRU, dans lequel les informations prédéterminées sont utilisées pour l'ajustement d'une longueur d'onde de transmission de la DU et la RRU, dans lequel les informations prédéterminées correspondent à un signal AMCC ou un message AMCC ; dans lequel
l'envoi des informations prédéterminées à la DU et/ou la RRU comprend :
l'envoi du signal AMCC à la DU et/ou la RRU, dans lequel le signal AMCC est utilisé pour commander la longueur d'onde de transmission de la DU et la RRU ; ou
l'envoi du message AMCC à la DU et/ou la RRU, dans lequel le message AMCC est utilisé par la DU et/ou la RRU pour former et envoyer le signal AMCC correspondant au message AMCC.

10. Procédé selon la revendication 9, comprenant :
la réception d'un signal modulé envoyé par la DU et/ou la RRU ; et
en fonction des informations prédéterminées, la réalisation d'une modulation de sommet sur le signal modulé et la génération du signal AMCC.

11. Procédé selon la revendication 9, comprenant en outre :
la détection d'une longueur d'onde de transmission actuelle entre la DU et la RRU ;
dans lequel la génération, par le dispositif AMCC indépendant de la DU et de la RRU, des informations prédéterminées en fonction de la longueur d'onde de transmission souhaitée comprend :
la génération, par le dispositif AMCC, des informations prédéterminées en fonction de la longueur d'onde de transmission actuelle et de la longueur d'onde de transmission souhaitée.
